# EUROPEAN PATENT APPLICATION

(11) **EP 2 549 428 A2**
(43) Date of publication of application: **23.01.2013**
(21) Application number: 12177249.5
(22) Date of filing: 20.07.2012
(51) Int. Cl.: G06Q 30/02, G09B 19/00, G06F 3/01

(54) **METHOD AND SYSTEM FOR GENERATING BEHAVIORAL STUDIES OF AN INDIVIDUAL**

(30) Priority: 22.07.2011 US 201113189249; 18.07.2012 US 201213552338
(71) Applicant: Dil Brands, Las Condes, Santiago (CL)
(72) Inventor: Muniz Simas, Fernando Moreira, Santiago (CL); Van Der Krogt,, Pepijn, Santiago (CL)
(74) Representative: Carvajal y Urquijo, Isabel

(57) **Abstract**

Method and system for generating behavioral studies of an individual, the system comprising:
a) peripheral devices (410) of control, visualization and data capture, to project the real movement of users into the virtual environment;
b) processor (11) for processing information of the virtual environment and behavior of the user;
c) storage medium (12) configured with an application module (1000) to provide the virtual environment;
d) dedicated storage medium configured with an On-Line module (1100) for storing a database with information of the virtual environment and the behavior of the user,
e) visualization means (14) to display graphical representation of the behavior of the user, illustrated by the On-Line Module (1100) with the database through the storage medium (12);

Peripheral devices of visualization comprise virtual reality lenses with stereoscopic vision, whereas peripheral devices of data capture comprise markers and a motion tracking device (5) to identify the exact position of the user with respect to the virtual environment.

## Description

### APPLICATION FIELD

The present invention relates to a system and a method for generating behavioral studies of an individual. In particular, the present invention is a portable system and method of flexible and immersive data collection in a virtual environment to study the behavior of an individual with respect to stimuli in the virtual environment.

The present invention has particular application in consumer, marketing and automotive research to study the behavior of an individual as a consumer in an environment, representing a point of exposure -being it a retailer, a mom-and-pop store, a car dealership - allowing analyzing the arrangement of items of interest in the structures of this exposure and the effect of this provision on the individual.

Manufacturers of fast moving consumer goods and automobiles invest large amounts of money developing and researching their products, their features, accessories and their location in the stores where they will be displayed as well 11 as all activities and communications to be executed at the point of sale. For that, these manufacturers require several market and consumer researches. Usually, these consumer researches are based on questionnaires and focus groups and individual interviews using live, real size and costly prototypes. Today, technology has allowed the development of a different approach to analyze the behavior of a consumer through the virtual reality and biometric devices to record and to interpret the consumer.

### BACKGROUND OF THE INVENTION

A point of sale can be easily described using a completely realistic Virtual Reality, where the advertising of products, the environment and the exhibition of the same can be done, and animated, so that a person is exposed to these stimuli without having to launch a production of a real life prototypes, which would be necessary to generate researches with questionnaires and focus groups.

At present there are different solutions for the study of the behavior of individuals in virtual environments. Four example, patent application WO2008/030,54 discloses a method for studying the behavior of a consumer's emotional responses measured by visual stimuli in a first aspect, the method includes the steps of: presenting a visual stimulus to a consumer, collection of data of the consumer's eye while watching the visual stimuli presented to the consumer, collecting biometric and eye-data while the stimulus is presented visually to the consumer, depending on zones and the time the consumer gazes at. However, this document discloses a method that remotely collects data from gazing and biometrics of a user, which requires that the user stays in a specific location, and therefore, it also requires sensors that works only if the user keeps his eyes focused within the range of the sensors.

Patent application WO2008/081,413 discloses a virtual reality system that includes a device equipped and used for a participant to present a simulation of a virtual store environment. Participant interactions with the virtual purchase environment can be used to generate market research on the process of consumer decision-making. The virtual store environment may include one or more intelligent systems configured to be responsive to participant interaction. The virtual store environment recreates a real world purchase environment using 2D screens and for the data collection an eye-tracking device is used. This invention uses an eye-tracking like EyeTech OneGlance ® Digital System to record the visual tour generated by the user, and at least one camera that determines the orientation of the pupil of the user, requiring the user to stay within field of view of the device and restricting the freedom of the user to alter the results of the resulting studies. However, this document discloses a system in which the user can not move physically in a free manner, but its movement within the virtual environment is simulated trough the manipulation of a handle, which simulates a "shopping cart" handle. Furthermore, this documents uses touch screens for representing the virtual environment to the user, which together with the handle indicates that the user is forced to stay physically fixed in a specific location, interacting with the virtual environment only using the handle and remotely looking at the screens. The movement of the body results in a rational decision, not subconscious, and its measurements cannot be considered as an intuitive - thus real - and be computed into results.

Furthermore, both documents discloses complex systems, which requires to be used in specific locations due to the complexity of its components, such as large screens for visualizing the virtual environment and remote sensor systems for identifying biometric data of the user. Therefore, the use of these systems is limited to a unique physical location, in which these systems do not allow the participation of simultaneous users.

### TECHNICAL PROBLEM

Accordingly, considering the above aspects of the state of the art, it can be inferred that there is a need of providing a portable system and method of data collection in a high quality, really immersive virtual environment to study the behavior of an individual that has to be interpreted, which should be flexible and immersive enough in order to provide a custom application that allows to have more realistic data of the user, for developing an accurate analysis of the behavior of a consumer base on more than just eye-tracking information.

### TECHNICAL SOLUTION/BRIEF DESCRIPTION OF THE INVENTION

The present invention provides a tool for behavioral analysis of individual that allows the generation and interpretation of many variables due to the control and access to all information that represents the virtual reality. The system comprises peripheral devices of control, visualization and data capture of the user's behavior, in which said peripheral devices capture and reflects the physical movement of the user into the virtual environment, registering at the same time detailed information about the behavior of the user in response to the virtual environment stimuli. The peripheral devices of visualization comprise virtual reality lenses with 3D vision, and the motion capture device comprise a plurality of markers and at least one camera, intended to identify the exact position of the user with respect to the virtual environment.

As a result, the present invention permits to at least one user to move physically and in a completely free manner such that he can interact with the virtual environment in a more natural and immersive manner through the use of the mentioned peripheral devices. Accordingly, the system permits to obtain detailed information of the behavior to at least one user, such as the individual's, exact position and direction of the body, head and eyes, the exact position of every object and structure shown in the virtual environment and captures real-time behavior. These variables allow obtaining conclusions that provides a basis for future decision-making. The present invention allows to obtain different levels of studies on types of arrangements (layouts), point of sale, current designs, or new combinations, different products, etc., and all produced by one system, in which the cost of both development and implementation is much lower than other alternatives in proportion to the results to be obtained finally, due to a more complete and natural virtual environment and from the body displacement within the virtual environment.

Furthermore, the present invention has the additional advantage that each one of its constituent parts can be easily transported, to be used in any place suitable for the study, avoiding that each user has to transport to the place in which the system is located. As a consequence, the system is not limited to the study of only one user for each session, since the present invention permits to operate with several users on-line and simultaneously.

### BRIEFDESCRIPTIONOF THE DRAWINGS

Figure1A illustrates devices of the system according to the present invention.
Figure 1B illustrates a perspective view of the user with the peripheral devices of data capture and visualization, in a preferred configuration of the invention.
Figure 1C illustrates a side view of the user with the peripheral devices of data capture, in the configuration of figure 1B.
Figure 1D illustrates a perspective view of at least one user with the peripheral devices of data capture and visualization, in a preferred configuration of the invention.
Figure2 illustrates the components of the application module of the system according to this invention.
Figure 3illustrates the components of the on-line module of the system according to the present invention.
Figure4 illustrates the capture module of the system according to this invention.
Figure5 illustrates the On-line module of the system according to the present invention.
Figure 6 illustrates the abstraction layer of functionality module of the system according to this invention.
Figure7 illustrates the communication protocol module of the system according to the present invention.
Figure8 illustrates the Management Interface' of the system according to the present invention.
Figure 9 illustrates the client interfacesystem according to the present invention.
Figure10 illustrates the visualization module of the system according to this invention.

### DETAILED DESCRIPTION OF THE INVENTION

The system and method according to the present invention requires the participation of an operator, an administrator, one or more users and one or more clients.

The Operator is the one who knows all aspects of the method and system according to the present invention. The operator can:
- Prepare the user to enter the virtual environment.
- Prepare the system of the present invention so the user can navigate seamlessly into the virtual environment.
- Know how the system works.
- Enter user data to the system.
- Control periferical devices for the Users.
- Control which environment the user will enter.
- Generate and manage reports with graphs obtained with the method of the present invention.

The Administrator, same as the operator, is a person trained to use the method and system according to the present invention. The administrator must be able to manage both clients and report data for each depending on the given information for the research studies.

The Administrator has the authority to change access to the data of different clients, allow access to different filters (such as age ranges or conditions of the respondents), reports (which include listings of time and relevance of groups or all products) and tools (like PDF or direct PowerPoint export or generate map images display samples), the list of filters, reports and tools available depend on the application of analysis of the captured data and this ensures that customers can make different operations on their research data.

The User is the individual object of the analysis; in general the studies are made to a particular group of users within a certain goal, the invention is able to study several users simultaneously with different systems at different locations. The data can be synchronized online.

The client is the individual or organization that is interested in the results of the analysis, probably the owner or representative of a product, multiple products or advertising. The client is the onewho is contracting the service, and expects results and conclusions on the analysis of the behavior of the target users, and is accessing the system with the permissions that were granted by the Administrator.

As disclosed in the accompanying figures, the present invention consists in a portable and immersive system, for data collection in a virtual environment to study the behavior of users in response to virtual environment stimulus. The system comprising:
a) peripheral devices (410) of control, visualization and data capture, which permits to project the real movement of at least one user into the virtual environment, registering information about the behavior of the user in response to stimulus;
b) a processor (11) for processing information of the virtual environment and the behavior of the User;
c) a storage medium (12) configured with an application module (1000) in communication with the processor (11) to provide the virtual environment;
d) a dedicated storage medium (not shown in the figures) configured with a On-Line module (1100) in communication with the processor (11) for storing a database with information provided by the application module (1000) of the virtual environment and the behavior of the user;
e) visualization mediums (14) configured to display graphical representation of said user behavior, illustrated by the On-Line Module (1100) with the database from the dedicated storage;
   wherein the peripheral devices of visualization comprise virtual reality lenses with stereoscopic vision, and the peripheral devices of data capture comprise a plurality of markers and at least one motion tracking device (5), that identifies the exact position of the user with respect to the virtual environment.

In a preferred embodiment of the invention, the lenses with stereoscopic vision are to be placed on the head of the subject and within it carry an eye-tracking camera.

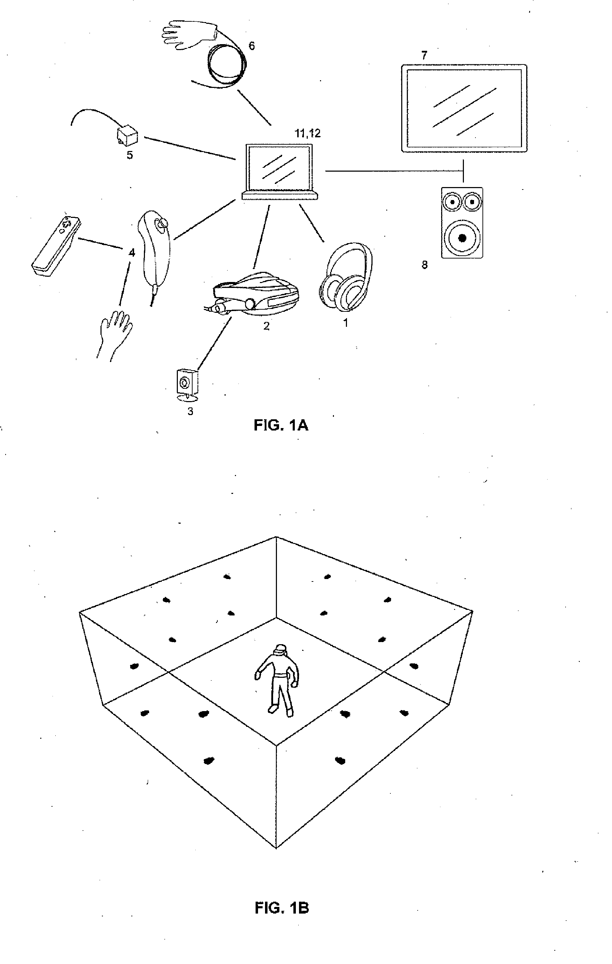

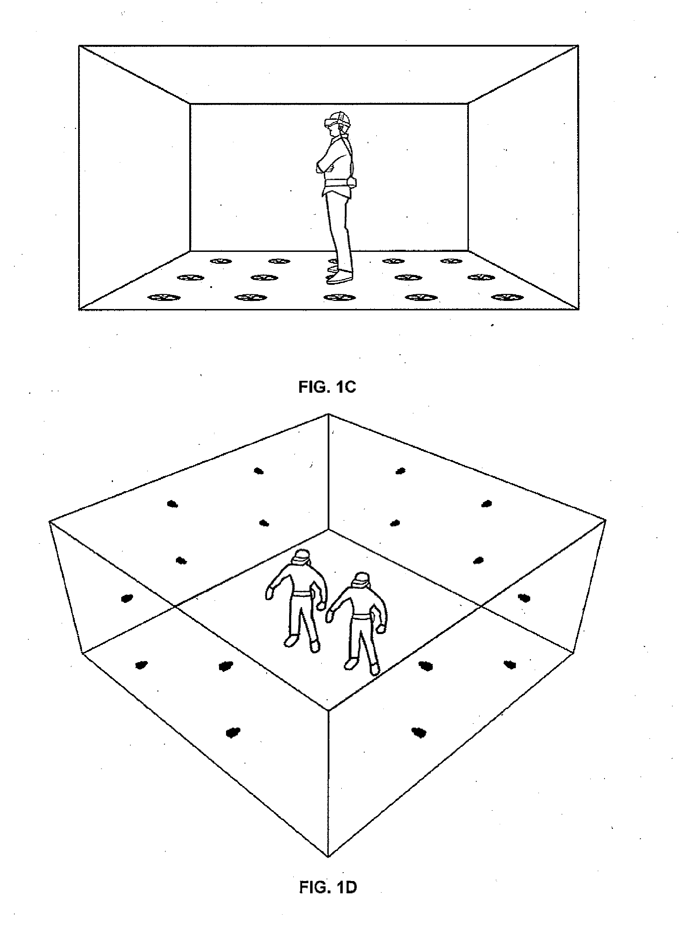

With respect to the peripheral devices of data capture, such as illustrated at figures 1B and 1C, a preferred embodiment comprise the eye-tracking camera and a plurality of markers located in different parts of the body and head of the user, and at least one camera (5) that captures the position of each marker, in order to provide detailed information of the position and direction of the body and head, and the fixation of the user with respect to the virtual environment. Another embodiment of the peripheral devices of data capture, includes a plurality of markers located in the surrounding space near to the user, including a motion-tracking device or camera (5) located in the head of the user capturing the markers that appears within his range of view in the direction of the head.

In this embodiment, the markers can cover a wide range of space allowing great movement of the subject, since the coverage area can be applied in different ratios, meaning that a certain distance in the real environment can be represented as a multiple of that distance in the virtual environment, greatly adding to the flexibility and versatility of the invention.

Therefore, the integration of the virtual lenses, eye tracking system and motion tracking system is a novelty and an integral part of the invention.

The peripheral devices of control correspond to the devices that the user manipulate in order to allow him to interact with the virtual environment. In different embodiments of the invention, these devices may alternatively include a joystick or a similar handheld device (4), a control glove (6), and also TOF cameras and software for movement recognition, to allow the user to navigate in the virtual environment naturally without the use of any equipment.

The peripheral devices of visualization additionally comprise portable headphones (1), and optionally may also comprise a TV display, screen or projector (7), to display the virtual environment visible through the set of lenses representing the virtual reality (2), and speakers (8) that play as well as portable headphones (1).

As previously mentioned, the peripheral devices of data capture preferably correspond to the eye-tracking, and a plurality of markers with at least one motion-tracking device (5). This motion tracking device (5) can be mounted on the lenses of virtual reality (figures 1B and 1C), or on supports around it,such as shown in figure 1A. As a consequence, these configurations allow to capture the user's motion and position (motion tracking), while it is also located within the virtual reality lenses (2)the eye-tracking device (3), to record the fixations of the user in the virtual environment. The motion-tracking device (5) records the position of the head and body, height, movement and general ergonomic measurements of the user in the virtual environment. However, the motion tracking device (5) may also consist in a joystick or a similar handheld device, a TOF cameras with software for movement recognition (4), and/or a control glove (6), that captures the user's gestures in the virtual environment. In other words, these devices mentioned previously can operate as control devices or data capture devices depending only from the function that they are performing. In other preferred embodiment the invention, there are simultaneously a plurality of users with the peripheral devices of data capture and visualization, such as illustrated at figures 1D.

Additionally, the system of the present invention may include means for printing the graphic representations of the behavior of said user, said print media can be printed directly on paper or record in computer readable medium as a pendrive, hard disk or CD, a mass storage device, or equivalent or directly send these graphs via a telecommunications network such as the Internet for remote visualization, according to client preferences.

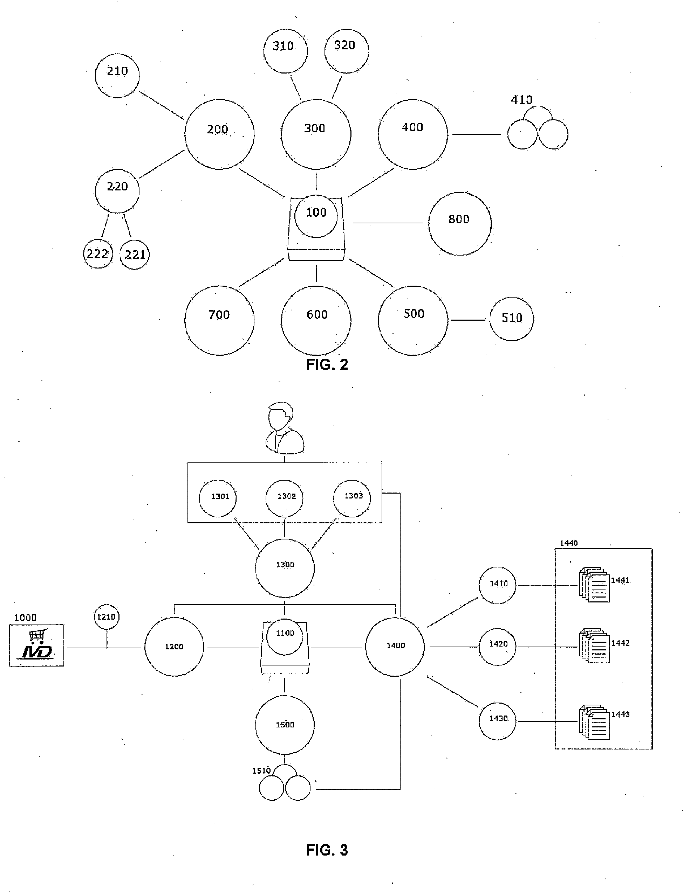

As shown in Figure 2, the application module (1000) of the present invention is configured with:
A core module (100) comprising an engine of virtual reality and real-time-programmable high-level language and a physical simulation engine in the virtual environment;
A command descriptor module (200) to enter operator commands to the application module (1000), the command module descriptor (200) comprising a Command analyzer (210) to analyze each command entered, and a console component (220) to enter each command and display a response to a command entered;
A training manager module (300) to familiarize the user with the virtual environment, and is responsible for managing training sessions;
A capture module, (400) comprising the information generated by peripheral devices (410) control and capture of the user in this virtual environment, the capture module (400) further comprises a data viewer component (430) and the report generator component (420) and communicates with peripheral devices for control and data capture (410);
A player module (500) comprising user instructions and allows the representation of the user in the virtual environment, the player module (500) further comprises a products visualizer component (510) for three-dimensional product visualization in the virtual environment in a minimal definition of 800 x 600 pixels with shading effects using real-time, allowing the simulation of materials;
A scene module (600) comprising a container with descriptions of scenes of the virtual environment and scripts for events in these scenes, these scenes includes descriptions of static and dynamic elements;
A free camera module (700) comprising a reference vector representing a camera moving freely within this virtual environment,
A visualizer module (800) that display samples based on customer requirements, comprising a visualization component (810) and a control component (820), and
A communication protocol module (1200) comprising a Dictionary component (1210) which communicates the On-Line module (1100) with the application module (1000).

The On-Line module (1100) system of the present invention is configured with:
The communication protocol module (1200) comprising the dictionary component (1210) connecting the On-Line module (1100) with the application module (1000);
A customer network interface (1300) for interaction with the client component comprises a report component (1301), a display component (1302) and a Publishing component (1303);
An abstract layer of functionality module (1400) including a database (1440), a project component (1410), a user component (1420) and an Other component (1430), in which the database (1440) includes a projects table(1441), a user table (1442) and an Others Table (1443); and
An Administration network interface (1500) for the interaction of the administrator and / or operator comprising a management component (1510).

### Core

Core module (100) comprises an interactive virtual reality engine in real time, a high-level programming language, and a physical simulation engine in the virtual environment.

The interactive virtual reality engine in real time is used to join all the resources and compile an executable from the storage medium (12) with the processor (11). This engine allows programming with high-level languages and program all the interactivity and information generation system and method of the present invention. The interactive real time virtual environment engine is operative with the processor (11) and is stored in said storage medium (12). This core module (100) also contains a physics simulation engine to achieve optimal detection of volumes of interest by tracing rays from the scene manager to detect those objects colliding with the eye, and then use this information to generate reports. The physical simulation also helps define the geographical area where the user can move. Additionally, the core module (100) includes an application or method of creating three-dimensional models and to create textures and images.

### Command Descriptor

Command descriptor module (200) includes the commands entered by the operator and those available in the virtual environment. The virtual environment has scheduled a series of commands that are unique to each module; the command descriptor module (200) can execute those commands.

A command from the Operator is an instruction with a defined syntax, which lets you alter a variable in the virtual environment. The commands are used to perform any task, from changing the height of the user to display data from the generated studies.

The definition of all available operator commands reside in the command descriptor module (200), also it defines if the commands are available in the current scene of the virtual environment scene defined in the module (600), their available attributes, data required by each, the type and format of this data and help messages if the command is not entered properly. The command descriptor module (200) communicates with the core modules (100), the training manager (300), capture (400), player (500), scene (600) and free camera (700).

The command descriptor module further comprises a command analyzer component (210) and a console component (220).

The commands analyzer component (210) includes definitions, syntax and required parameters for each command. The commands analyzer component(210) is in charge of taking a command and analyzing information, identifying each of the elements of the command and then comparing with its definition to verify the syntax. In the event that the syntactic construction and logic is correct, the command analyzer component (210) will execute the command; otherwise, it sends a message to the console component (220) describing the error detected.

The console component (220) is responsible for receiving operator input and display messages relating to that virtual environment, for it has an interface that is divided into two parts: a board (221) and an input field (222). The board (221) is a graphic element that shows a history of all messages generated, using a color format to easily identify the message type and shows the time the message was added. The input field (222) is a graphic element where the operator can enter a command with the help of a keyboard, the operator can type on the keyboard the command needed and press the "Enter" to execute. The operator can also browse the board (221) through the command history with arrow keys up and down arrow on the keyboard, this avoids having to type again the previously used commands.

A command can be entered in three ways, automatically via a plain text file that contains a script, using the input field (222), the board (221) or using peripheral devices (410) with one of the different graphical interfaces created, such as virtual the reality goggles (2) or the optional projector (7). Building a command allows to specify multiple attributes at the same time because each has an associated number of data according to the Command Descriptor Module (200).

### Training

The training manager module (300) uses training scenes and training sessions defined in the scene module (600) to familiarize the user with the virtual environment, and is responsible for the administration of training sessions. A training session is a set of tasks that a user must perform correctly; these training sessions are to prepare the user within the virtual environment so that you can achieve the best possible experience when used for a research study. These sessions train the user from things as basic as looking around, to walking around in the virtual environment and interact with the system interface, while he is offered a series of options and choices like picking up an object, selecting the color of an object, accessories and other elements.

Training sessions are tailored to the different characteristics of target users for the study according to the customer's requirements. Every training session executed communicates with the capture module (400) and its report builder component (420) to deliver a report with results, times and the path that the user used when executing their tasks, so that the operator can then analyze how the user adapted to the system of the present invention. These reports can be displayed on a console, or saved to file in plain text format using the data viewer component (430).

A training session consists of a set of tasks, each task consists of several instructions and each instruction represents an event or change in job status.

A training session includes an entry task and one or more training tasks. When a user starts a training session the task is run, which is defined as the input task, which is where the training session starts, with for example an introduction and preparation to continue the rest of the training tasks. Each task defines its output corresponding to an event to get somewhere or observe an object and the output is equivalent to start another task or completion of training.

Each task consists of a sequence of instructions, each instruction represents an event, such as "look at the object" which is assigned a name that serves to associate a particular output, or a change of state, such as " Show: Welcome to IVD." A task can have multiple outputs, this controls the flow of the workout, such as another particular output can be generated when the user falls off a platform then the output is an instruction to restart the current task, so the running task will rerun from the start, yet another particular output can be generated when the user reaches a target then the output is a reference for the next task.

Through events and instructions one can even assemble scenes of the module scene (600) through decisions of the user, where the user decides his next task, thus having more freedom to go over some instructions in case it deems appropriate.

### Capture

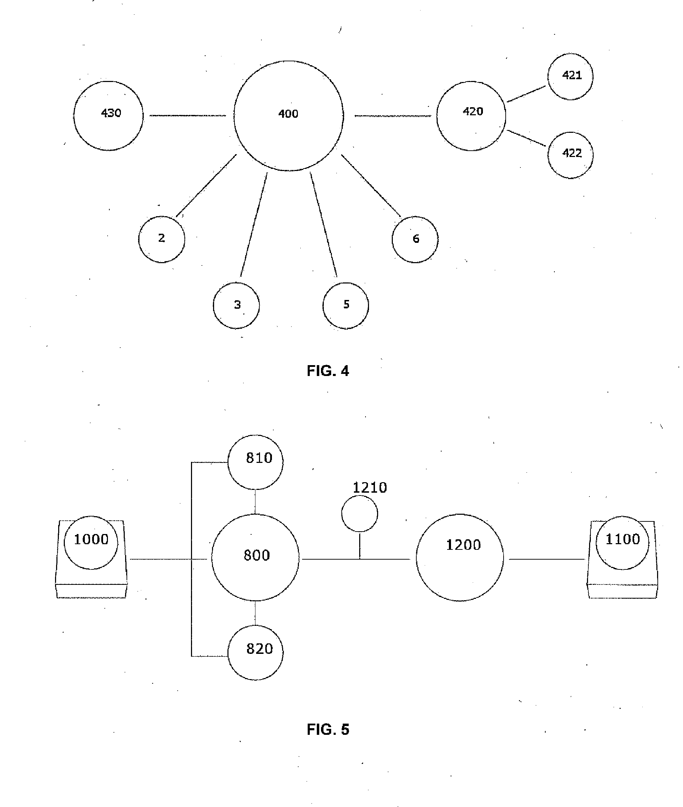

As shown in Figure 4, the capture module (400) comprises information generated by peripheral data capture devices (410) like the motion tracking of head movement, of the stereoscopic lenses (2), eye-tracking device (3), the motion tracking device (5) and joystick, gesture hand tracking(4), or control glove (6) of the user in the virtual environment. The capture module (400) further comprises a data viewer component (430) and the report builder component (420) and communicates with peripheral control and capture devices (410).

The capture is a real-time collection of actions that the user performs. In this way it is possible to reconstruct the path of sight and movement the user had, based on this data collection.

The main functions of the capture module (400) include:
- data recording of user behavior by signals from peripheral devices (410);
- save behavior data to a file in mentioned storage medium (12);
- load behavior data from a file;
- generate reports and statistics;
- replay behavior data in real time; and
- communicate with a central server to store behavior data remotely.

The recording of behavioral data from a user is performed by peripheral control and data capture devices (410) and are based on two parameters: duration and interval. The length determines how long the user's behavior to be recorded while the interval defines how many samples will be taken during that time.

The duration and interval are specified in seconds; however, to achieve a good reconstruction of the performance values it is recommended to specify intervals of less than 1 second. Values range between 0.05 and 0.15 seconds are good choices because they provide a minor error in the reconstruction of the performance curve. Usually, we use an interval of 0.15 seconds and can be adjusted dynamically. This interval should always be less than the time of fixation provided below.

Optionally, the eye-tracking device (103) refines the values listed above.

According to the "Eye Movement in Reading and Information Processing: 20 Years of Research" Psychological Bulletin, Keith Rayner, 124 (3), 372-422, 1998, an individual stares at a point if the time is less than a value between 0.1 to 0.3 seconds, so in the virtual environment, for intervals of 0.1 to 0.3 seconds, a fixation is defined theoretically in a product or brand.

The performance data files that the capture module (400) uses are in XML format, XML is a W3C standard, widely recognized and used, so its use is easy because the whole system according to the present invention uses XML as data the communication format.

Data display component (430) represents the performance data of a recording in real time using peripheral devices (410) in the virtual environment. The data display component (430) and the core module (100) process stored behavior data and convert them into visual objects of the virtual environment in different formats depending on what is being analyzed. These visual objects can be hidden, combined, tittered, and so on. So that the information is as clear as possible. Different formats can be combined, filtered, split, go, saved and recovered.

The capture module (400) further comprises a report generator component (420) that generates reports that can be sent to a console (428), a data server that contains all the information from research or directly to a file (421). The reports are representations of performance data mainly transformed into information that can be understood by a person interested in the research studies of behavior of individuals in order to obtain logical conclusions from them.

The report generator component (420) formats performance data and sends them to the corresponding output, whether it is a console, a data server or directly to a file. Included are the formats that are most required, plain text format, XML format, a work template or a word processor format file. The plain text format formats the data so that behavior can be displayed and analyzed at the time of opening the text file, it contains appropriate clearances and the data is grouped in tabular form. On the other hand, the work template is formatted by adding special characters within the data so that when imported into an Excel or SPSS template.

### Player

The player module (500) includes user instructions and allows the representation of the user in the virtual environment. All that the user performs is sent from the peripheral control and data capture devices (410) to this player module (500) for interpretation as user instructions. In particular, the gaze direction of the user is detected by the motion tracking together with eye-tracking.

The user Instructions that the player module (500) contains are:
- walking forward;
- walking backwards;
- turn the head and body independently;
- bending and standing up straight;
- panoramic view;
- observe a detail of the virtual environment;
- take a product in the virtual environment;
- let go of a product in the virtual environment;
- purchase a product in the virtual environment; and
- cancel the purchase of a product in virtual environment.

The virtual environment of the present invention accurately reflects each of these actions, so that the user is as much immersed in this experience as possible, for which the player module (500) sends User instructions to the core module (100) for its processing in the virtual environment.

The player module (500) is active only when the operator deems appropriate, whether for study, training or to explain the operation of the system and only in the necessary scenes.

Additionally, the player module (500) simulates the height of the user. When the height of a user changes the player module (500) adjusts the height of vision within the virtual environment to ensure consistency between what the user sees in the virtual environment and what would see in the real environment, this is based on the input from the motion tracker device.

The height of view is different from the height of the user, a percentage of the height of the person is determined as the average eye level, this percentage is used to calculate the height of vision, which is where you put the virtual reality lenses based on the user's height, for the average person uses a percentage of 93.8% for men and 94% for women according to the International Encyclopedia of Ergonomics and Human Factors, Waldemar Karwawski, page 912.

Finally, the player module (500) is also responsible for checking that the user stays within the limits for a particular virtual environment, for example, it does not cross aisles of products or leaves the store. The limits are defined by collisions, which are structures defined in the virtual reality engine to detect if the user is geographically in a particular geographic area of the virtual environment.

The player module (500) further comprises a products display component (510) which depends strictly on user instructions received from the player module (500). The products display component (510) includes three-dimensional product displays in the virtual environment to be studied at a definition of a minimum of 800 x 600 pixels, and allows visualization using shading effects in real time allowing the simulation of materials. The high definition display of products helps observing all the details you can have both on the label and in the material, this is especially useful in products that are in testing phase before production. The material and graphical content of the product also interacts with different effects of shadows, reflections and illumination of the virtual environment, allowing a more realistic appreciation of the object. When a product is represented in high definition, the user can view from any angle, as well as zoom, so this products display component (510) comprises the following product instructions:
- Display product:
- turn the product;
- zoom in on product;
- zoom out on product.

### Scene

The Scene module, (600) comprises a container with descriptions of scenes of the virtual environment and scripts for events in these scenes. Each scene in the virtual environment is represented by a scene description containing all the elements needed to generate the content of the scene. Proper operation depends exclusively on the scene description that includes static and dynamic elements. Static elements are all elements that have no user interaction such as walls, trusses, lighting, shelves and more. Dynamic elements are all ones that can interact with the user such as or other objects that can be enabled or disabled as required by the scene.

The scene module (600) further comprises a main menu that contains all valid scenes that can be accessed within the virtual environment, as well as training scenes and study scene.

A scene from training or study is a description of scene that has the description of different rooms where defined tasks are executed, the present objects, lighting, event areas, and others. Also each scene description includes a script session with the tasks and instructions to be used in training or a behavioral study.

### Free Camera

The free camera module (700) comprises a mobile reference vector representing a free camera within this virtual environment. In the player module (500), the user has the freedom to move within a virtual environment (for example, a store or a room) according to what the user wants and where he wants, but always within the limits of the scene description that the scene module (600) provides. Instead, the free camera module (700) provides the functionality of a virtual camera that can move in any direction at any time. Its main function is to visualize what exists in the virtual environment from angles that the user could not accomplish in the player module (500). The free camera module (700) enables real-time view at different angles of the same situation that fit exactly the needs that may arise and may not necessarily be achieved with the player simulation module (500) in the virtual environment.

### Visualizer and Graph Representation Module

As shown in Figure 5, the visualizer module (800) includes a visualization component (810) and a control component (820). The visualizer module (800) is an essential component of the present invention to display samples based on customer requirements.

The visualizer module (800) communicates through communication protocol module (1200) with the abstract layer of functionality module (1400) and is defined in the application module (1000) and the On-Line module (1100), it sends data to the visualization component (810) that is responsible for generating the visualization. This module obtains data information from the controller module. Finally, the visualizer receives the visualization and all necessary data structures to make it physically visible on the screen.

The visualizer module (800) represents the final instance in which the data captured by a study is used to generate information relevant to client's interest. That's why it is analyzed as a separate and independent component. It provides an advanced level of interactivity, allowing the user to adjust the visualizations to its needs.

The visualizations are the way the samples are on a two-dimensional image or visualized in the interactive 3D environment, equivalent to the virtual environment when the samples were captured by the capture devices. There are several types of visualizations, including but not limited to those described below:
Fixations: Fixations are represented by points of a range of pixels that represent the smallest unit of the fixation points of the user's gaze in that virtual environment, one point per sample, which can have different shapes and colors.
Heatmaps: Heatmaps are represented by points of a range of pixels (for example 3) representing a fixations in this point, for every additional fixation the color of the point will change from blue to green, yellow to red depending on the % of fixations of a total of fixations at this point.
Floormap: Floormaps are represented by the positions of a user; every position is represented by a point of a range of pixels. The color of the point changes from blue to green, yellow and red depending off the % of times a user or users were in this point.
Vectors: Vectors indicate the flow of the eye movement and or the body position in time. The arrow will indicate the direction of the eye movement and or body position. The vectors are connected by lines. The vectors can be visualized by user or by sample sizes.

Objects can be any elements within a virtual environment as packages, price tags, pop materials, or elements on a car or many cars.

In the viewer component (810) all visualizations are processed and then returned in the necessary structures to make them properly visible, including dynamic lists, textures, materials, ramps, position, time, products, vectors, filters and images. The displays have a direct relationship with the controls, because data is obtained from them that are necessary for adjustments of each of the visualizations.

In the control component (820), controls help adjust each visualization separately; you can assign textures, gradients, colors, materials, supplies, forms, etc., depending on the display. Each display has a certain amount of configurable parameters.

The different configurations of controls and adjustments can be stored for later use with different samples.

Within the controls it is included settings for:
- Textures
- Gradients
- Forms
- Colors
- Materials
- Positions
- Totals
- Visible Elements
- Other settings

### Online

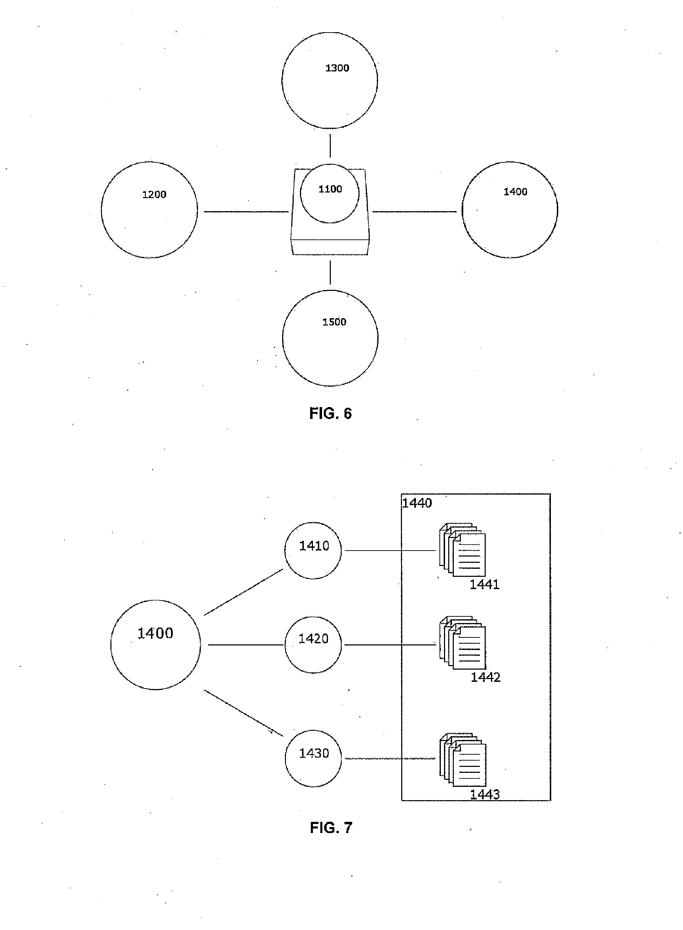

As shown in Figure 6, the On-Line Module (1100) centralizes remote operations of the user, the client, the operator and manager. The On-Line Module (1100) includes:
- A communication protocol module (1200);
- A customer interface (1300);
- Anabstract layer of functionality module (1400), and
- A manager interface (1500).

The On-Line Module (1100) permits the connection between users, operators, managers and clients remotely via the communication protocol module (1200), to centralize and organize the information into a database using the abstract layer of functionality module (1400), reporting to the customer quickly and securely through the client interface module (1300). Projects are administered by a trained person at any time and from anywhere via the administrator interface module (1500).

### Communication Protocol

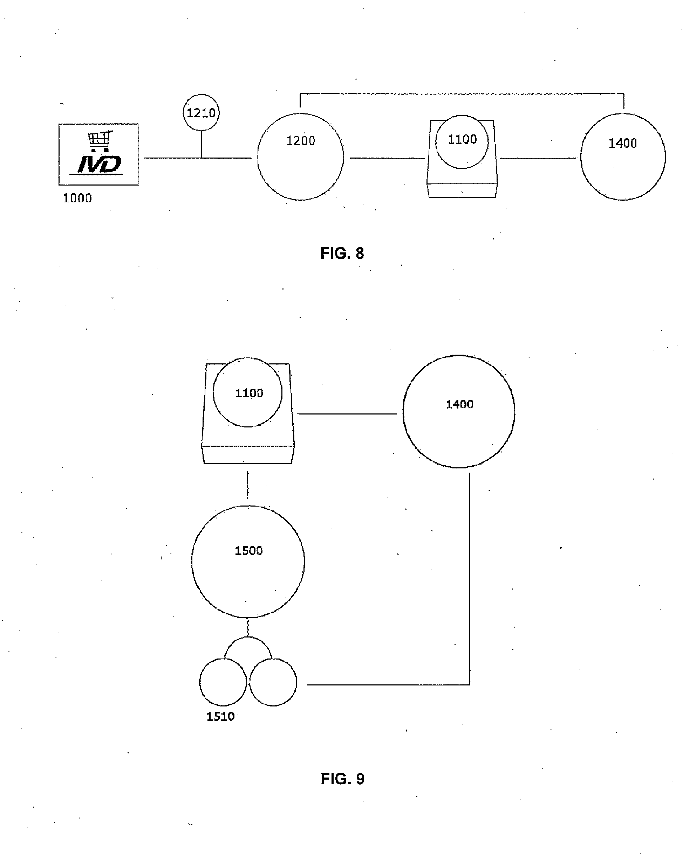

As shown in Figure 8, a communication protocol module (1200) comprising the dictionary component (1210) connects the on-line module (1100) with the application module (1000). The communication protocol module (1200) receives a request from the application module (1000), validates if the request is correct and sends it to the abstract layer of functionality module (1400).

To communicate it is used the dictionary component (1210), which transforms the information contained in the request to the XML format or another format that allows to be passed through HTTP Requests.

The communication protocol module (1200) uses the abstract layer of functionality module (1400) for all inquiries; so it has no direct interaction with the database (1440) and transmits the information structured according to the abstract layer of functionality module (1400).

### Client Network Interface

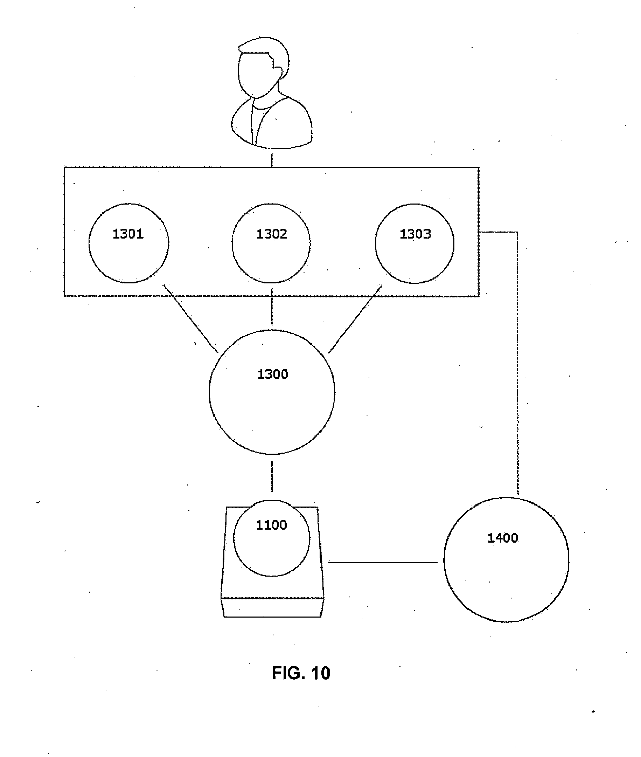

As shown in Figure 10, the clientnetwork interface (1300) for interaction with the client comprises a report component (1301), a display component (1302) and a Publishing component (1303).

The clientnetwork interface (1300) sets out the relevant research data to the client, who is the most interested in the research, and what can be concluded by the same. The clientnetwork interface (1300) is able to display reports and graphs of the behavior of said user or users in said virtual environment in different ways, helping the interpretation and conclusion of the data, and therefore the decision-making.

The clientnetwork interface (1300) includes a set of functions on surveys and interviews among others, these functions communicate with the abstract layer of functionality module (1400) to retrieve the structured, information stored for each of the functions. These functions use the modules of the present invention to represent information so that the client can understand it, whether in pictures, bar graphs, XML data, tables or reports.

### The main functions are

- Reporting: is responsible for generating a report humanly friendly from a data collection, generally in readable language and helped with someimages.
- Visualizer: is responsible for obtaining and deliver data to make possible the different views of the system, communicating with the visualization module (800) by the communication protocol module (1200).
- Publications: Its function is to publish images associated with the visualizations but with a more conceptual character, i.e., products or shelf.

The visualizations are the way the samples are deployed on a two-dimensional image. Equivalent to the virtual environment when the samples were captured by the capture devices. There are several types of visualizations, including but not limited to those described below:
- Fixations: Fixations are represented by dots that represent the smallest unit of the fixation points of the user's gaze in that virtual environment, one point per sample, which can have different shapes and colors.
- Heatmaps: Heatmaps are represented by points of a range of pixels (for example 3) representing a fixations in this point, for every additional fixation the color of the point will change from blue to green, yellow to red depending on the % of fixations of a total of fixations at this point.
- Circular Graph: this display shows the flow of the fixations identifying the position eye of each and of all respondents or the respondents - as selected per each filter defined previously - interest or selection that reached a particular object within that virtual environment, describing the path of the eye before seeing the object, so you can visualize the relevance or the attraction of the object relative to its neighbors. The circular graph is generated from the fixations registered by each element, which received fixations in the virtual environment and charts the path from, to, between and among objects. Added to that the circular graph also deliver the following details of information:
   - the amount of fixations each object receives
   - the relevance each object has among all objects inside' the virtual environment
   - the objects that were most fixated
   - the objects that where most selected
   - the objects that were most purchased
   - and all the relations among the objects

### Abstract Layer of Functionality

As shown in Figure 7, the abstract layer of functionality module (1400) includes a database (1440), a project component (1410), a user component (1420) and anOther component (1430). This database (1440) includes a projects table (1441), a user table (1442) and an Others Table (1443).

This abstract layer of functionality module (1400) is responsible for communicating with the database (1440) for all necessary consultations, thus, represents a conceptual layer that abstracts from the rest of the SQL query modules changing them for conceptual more human-friendly function, such as "Get Active Projects" or "Save capture."

This abstract layer of functionality module (1400) is composed in turn by a. certain number of components responsible for specific instructions within the database. The project component (1410) communicates with the table of projects (1441) of the database (1440) and is responsible for all queries related to research projects such as: Get active projects, on / off project, get information about a particular project.The user component (1420) communicates with the username table (1442) of the database (1440) for information related to user behavior, and the Other component (1430) communicates with the Others Table (1443) of the database (1440) for various information not related directly to the user or the project for a client.

Optionally, the abstract layer of functionality module (1400) includes a component *Help,* which is not necessarily a specific or important function within the system but is used to help other components, so that each one remains on the task in particularly, but will not incur in performance problems every time it is called.

The components of this abstract layer of functionality module (1400) are used to encapsulate the functionality of the system and load code only when needed, thus optimizing the execution of scripts.

In the abstract layer of functionality module (1400) and in each of the components the data structure defined in component dictionary (1210) of the communication protocol module (1200) is used to standardize the queries that can be performed.

### Network Management Interface

As shown in Figure 9, a network management interface (1500) for interaction with the Administrator and/or operator comprising a management component (1510).

The network management interface (1500) includes a set of functions within the concept of Model View Controller (MVC) using the abstract layer of functionality module (1400) to obtain and modify information in the database (1440). It contains a function, which administrates project (1510) that communicates with the projects table (1441), a function administrates user (1520) which communicates with the user table (1442) and an other function administrates Other (1530) that communicates with the Others Table (1443).

The configuration of the complete system of the present invention is executed by an administrator, or more, through the network interface administration module (1500) so the critical system settings and individual research projects are protected from the rest of the application via a user access control, administrators and permission control to change or view records.

The network management interface (1500) allows the following, but is not limited to:
- Initiate new research;
- Set these research sessions, interviews, dates, places, etc..;
- Add consumers to a particular session;
- Manage clients;
- Add, block and delete users, and
- Assign access permissions. -

### Method according to the invention

The flexible method to generate an immersive research study of the behavior of a user regarding stimuli in a virtual environment comprising:
a) providing peripheral devices of control, visualization and data capture (410), which permits to project the real movement of at least one user into the virtual environment, comprising virtual reality lenses with stereoscopic vision, and a plurality of markers with at least one camera, allowing to identify the exact position of the user with respect to the virtual environment;
b) providing a processor (11) for processing information of the virtual environment and the behavior of said user, and a storage medium (12) configured with an application module (1000) and an On-Line module (1100), both in communication with the processor (11) to provide the virtual environment, wherein the On-Line module (1100) stores into a database (1440) the information provided by the application module (1000);
c) entering a description of a user by an operator through a command descriptor module (200)to a player module (500), both defined in the application module (1000);
d) communicating a scene description (601) and a script (602) through a scene module (600)to a core module (100) in the application module (1000), wherein the scene module (600) comprises a container of scene descriptions of the virtual environment and scripts for events in these scenes;
e) generating a virtual environment according to said scene description (601) and script (602) through the core module (100);
f) providing a visualization of the environment to the user through the player module (500) considering user's instructions provided by the peripheral devices, allowing to project the real movement of the body, head and eyes of the user into the virtual environment, and interacting with the same;
g) recording the movement of the body, head and eyes of the user using a capture module (400) defined in the application module (100), which consider the information captured by the peripheral devices (410);
h) storing the recording of the capture module (400)in a database (1440)in the storage medium (12), as structured information;
i) communicating the structured - the visualization module (800) defined in the application module (1000), wherein the structured information is illustrated in the visualization module (800) by a viewer component (810) on a display (14)to the customer; and
j) generating a study report of user behavior in the virtual environment using the report component (830) defined in the visualization module (800) according to the specifications of the control component (810).

Particularly, the storage medium is also configured with a network management interface (1500) which includes a set of functions to get and modify information in the database (1440).

The communication protocol module (1200) communicates the recording of the capture module (400) with the abstract layer of functionality module (1400), which stores the recordingin a database (1440) at the storage medium (12). Furthermore, the communication protocol module (1200) also communicates the structured information to the visualization module (800), defined in the application module (1000).

The structured information is illustrated in the visualization module (800)to the customer according to the specifications provided by client, administrator and/or operator in the control component (810), wherein the components views (810) and control (820) are defined in the visualization module (800).

Once the structured information is illustrated in the visualization module (800), this module communicates with the customer network interface (1300) through the communication protocol module (1200), wherein the customer network interface (1300) is able to show reports and graphs of the behavior of that user in the virtual environment.

In particular, generate a report of the research of user behavior in the virtual environment according to the method of the present invention comprises generating:
- Samples represented by points that represent the fixation points of the user's gaze in that virtual environment;
- Areas of high and low density represented in a map that shows a color where there are high-density samples and other color represents places with low density of samples;
- Density gradient that works with 256 different levels of density in the samples, which can be illustrated by a gradient of two or more colors to display each of the levels and the transition between them;
- Higher density areas are displayed in a list sorted by density showing the times each of these areas was seen, and / or
- Flow of Vectors and interrelating of parts, accessories or components which reached a particular object within that virtual environment, describing the path of the eye before running into the object, it can visualize the relevance or attractiveness of the object relative to its neighbors.

Additionally, the method of the present invention comprises delivering a research report about user behavior in the virtual environment with a customer network interface (1300) through a report component (1301), a visualization component (1302) and/or publication component (1303).

Optionally, the method of the present invention comprises a later stage): to communicate to the scene module (600) the beginning of a training session from a training manager module (300) and in step b), the description of scene (601) corresponding to a training scene and the script (602) corresponds to a training script, to conduct a training session with the user.

In particular, the method of the present invention comprises performing a series of training tasks by the user in the training session of the user.

## Claims

1. A system of data collection in a virtual environment to study the behavior of a user with respect to virtual environment stimuli, comprising:
a) peripheral devices (410) of control, visualization and capture of data, which permits to project the real movement of at least one user into the virtual environment, registering information about the behavior of the user in response to one or various stimuli;
b) a processor (11) for processing information of the virtual environment and the behavior of said user obtained by the peripheral devices;
c) a storage medium (12) configured with an application module (1000) in communication with the processor (11) to provide the virtual environment;
d) a dedicated storage medium configured with an On-Line module (1100) in communication with the processor (11) for storing a database with information provided by the application module (1000) on of the virtual environment and the behavior of the user, and
e) visualization means (14) configured to display graphical representation of the behavior of the user, illustrated by the On-Line Module (1100) with the database through the storage medium (12);
wherein the peripheral devices of visualization comprise virtual reality lenses with stereoscopic vision, and the peripheral devices of data capture comprise a plurality of markers and at least one motion tracking device (5), that identifies the exact position of the user with respect to the virtual environment.

2. The system according to claim 1, wherein the lenses with stereoscopic vision are to be placed on the head of the user, and within the lenses it carries an eye-tracking camera.

3. The system according to claim 1, wherein the peripheral devices of data capture comprise a plurality of markers located in different parts of the body and head of the user, and at least one camera that captures the position of each marker, in order to provide detailed information of the position and direction of the body and head of the user with respect to the virtual environment.

4. The system according to claim 1, wherein the peripheral devices of data capture comprise a plurality of markers located in the surrounding space near to the user, including a camera located in the head of the user capturing the markers that appears within his range of view in the direction of the head.

5. The system according to claim 1, wherein said peripheral control devices (410) can be a control knob (joystick) hand gesture or a TOF camera and software for motion recognition (4) and / or a control glove (6), to allow the user to move in the virtual environment.

6. The system according to claim 1, wherein said optional peripheral representation devices (410) include a TV or projector and screen (7) and speakers (8).

7. The system according to claim 1, wherein said peripheral capture devices(410) further comprises a head and/or body motion tracker (5) to record body movement and position of the user in the virtual environment and the glove control (6) that captures the user's gestures in the virtual environment.

8. The system according to claim 1, comprising means for printing the graphic representations of the behavior of said user, wherein said printing means you can print directly on paper or save in a readable format as a CD, a mass storage device, or equivalent or directly send these graphs via a telecommunications network such as the Internet according to customer preferences.

9. The system according to claim 1, wherein the application module (1000) is configured with:
a core module (100) comprising an virtual reality engine in real-time-and programmable in high-level language and a physical simulation engine in the virtual environment;
a command descriptor module (200) to enter operator commands to the application module (1000), the Command Descriptor Module (200) comprising an Command analyzer (210) to analyze each command entered, and a console component (220) to enter each command and
display a response to a command entered;
a training manager module (300) to familiarize the user with the virtual environment, and is responsible for managing training sessions;
a capture module (400) comprising the information generated by peripheral control and capture devices (410) of the user in this virtual environment, the capture module (400) further comprises the Data Viewer component (430) and the Report generator component (420) and
communicates with peripheral control and capture devices (410);
a player module (500) comprising user instructions and allows the representation of the user in the virtual environment, the player module (500) further comprises a Products display component (510) for three-dimensional product displays in the virtual environment in a minimal definition 800 x 600 pixel using real-time shading effects allowing the simulation of materials;
a scene module (600) comprising a container of scene descriptions of the virtual environment and scripts for events in these scenes, these scenes includes descriptions of static and dynamic elements;
a free camera module (700) comprising a reference vector representing a camera moving freely within this virtual environment,
a visualizer module (800) that display samples based on customer requirements, and
a communication protocol module (1200) comprising a Dictionary component (1210) and communicates the On-Line module (1100) with the application module (1000);
wherein the application module (1000) servers all possible system application and test environments, for testing, training and simulations.

10. The system according to claim 9, wherein the On-Line module (1100) of the system of the present invention is configured with:
a communication Protocol module (1200) that comprising the Dictionary component(1210) connects the' On-Line module (1100) with the application module (1000);
a customer network interface (1300) for interaction with the client comprises a report component (1301), a visualization component (1302) and a Publishing component (1303);
an abstract layer of functionality module (1400) includes a Database (1440), a project component (1410), a user component (1420) and a Other component (1430), this database (1440) includes a Projects table (1441), a user table (1442) and an. Others Table (1443); and
a Network administration Interface (1500) for the interaction of the Administrator and / or operator comprising a administration component (1510).

11. A method to generate a study of the behavior of users regarding stimuli in a virtual environment to develop a custom application to an accurate analysis of the behavior of a consumer, which comprises :
a) providing peripheral devices of control, visualization and data capture (410), which permits to project the real movement of at least one user into the virtual environment, comprising virtual reality lenses with stereoscopic vision, and a plurality of markers with at least one camera, allowing to identify the exact position of the user with respect to the virtual environment;
b) providing a processor (11) for processing information of the virtual environment and the behavior of said user, and a storage medium (12) configured with an application module (1000) and an On-Line module (1100), both in communication with the processor (11) to provide the virtual environment, wherein the On-Line module (1100) stores into a Data Base (1440) the information provided by the application module (1000);
c) entering a description of a user by an operator through a command descriptor module (200)to a player module (500), both defined in the application module (1000);
d) communicating a scene description (601) and a Script (602) through a Scene module (600)to a Core module (100) in the application module (1000), wherein the Scene module (600) comprises a container of scene descriptions of the virtual environment and scripts for events in these scenes;
e) generating a virtual environment according to said scene description (601) and Script (602) through the Core module (100);
f) providing a visualization of the environment to the user through the player module (500) considering user's instructions provided by the peripheral devices, allowing to project the real movement of the body, head and eyes of the user into the virtual environment, and interacting with the same;
g) recording the movement of the body, head and eyes of the user using a capture module (400) defined in the application module (1000), which consider the information captured by the peripheral devices (410);
h) storing the recording of the capture module (400)in a Database (1440)in the storage medium (12), as structured information;
i) communicating the structured information to the visualization module (800) defined in the application module (1000), wherein the structured information is illustrated in the visualization module (800) by a viewer component (810) on a display (14)to the customer; and
j) generating a study report of user behavior in the virtual environment using the report component (830) defined in the visualization module (800) according to the specifications of the control component (810).

12. The method according to claim 11, wherein the storage medium is also configured with a network management interface (1500) which includes a set of functions to get and modify information in the database (1440).

13. The method according to claim 11, wherein a communication protocol module (1200) communicates the recording of the capture module (400) with an abstract layer of functionality module (1400), which stores the recording in the database (1440) at the storage medium (12).

14. The method according to claim 13, wherein the structured information is displayed in the visualization module (800) via the communication protocol module (1200), defined in the application module (1000).

15. The method according to claim 11, wherein the structured information is illustrated in the visualization module (800)to the customer according to the specifications provided by Client, Administrator and / or operator in the control component (810), wherein the components Views (810) and Control (820) are defined in the visualization module (800).

16. The method according to claim 14, wherein after the structured information is illustrated in the visualization module (800), it communicates with a customer network interface (1300) through the communication protocol module (1200), wherein the customer network interface (1300) is able to show reports and graphs of the behavior of the user in the virtual environment.

17. The method according to claim 11, wherein the generation of a report of the study of user behavior in the virtual environment according to the method of the present invention comprises generating:
- Samples represented by points that represent the fixation points of the user's gaze in that virtual environment;
- Areas of high and low density represented in a map that shows a color where there is a high density of samples and other color represents places with low density of samples;
- Density gradient that works with 256 different levels of density in the samples, which can be illustrated by a gradient of two or more colors to display each of the levels and the transition between them;
- Higher density areas are displayed in a list sorted by density showing the times each of these areas was seen , and / or
- Flow Vectors and interrelating of parts, accessories or components which reached a particular object within the virtual environment, describing the path of the eye before looking at the same object, it shows the relevance or the attraction of the object relative to its neighbors.

18. The method according to claim 11, wherein further comprises delivering a research report to study user behavior in the virtual environment with a Customer Network Interface (1300) through a Report component (1301), a Display component (1302) and / or Publishing component (1303).

19. The method according to claim 11, wherein optionally comprises a subsequent step a): to communicate to the Scene module (600) the beginning of a training session from a Training Manager module (300) and step b) a description of Scene (601) corresponds to a training scene and the Script (602) corresponds to a training script , to conduct a training session with the user.
